# EUROPEAN PATENT SPECIFICATION

(11) **EP 1 545 084 B1**
(45) Date of publication and mention of the grant of the patent: **01.06.2011**
(21) Application number: 03029313.8
(22) Date of filing: 18.12.2003
(51) Int. Cl.: G06F 21/00

(54) **System and method for digital rights management**
System und Verfahren zur Verwaltung digitaler Berechtigungen
Procédé et dispositif de géstion des droits numériques

(43) Date of publication of application: 22.06.2005
(73) Proprietor: RESEARCH IN MOTION LIMITED, Waterloo, Ontario N2L 3W8 (CA)
(72) Inventor: Bells, Matthew, Waterloo, Ontario N2L 6M2 (CA)
(74) Representative: MERH-IP Matias Erny Reichl Hoffmann

(56) References cited:
- EP-A- 1 261 185
- WO-A-02/37315
- US-A1- 2002 081 995
- US-A1- 2003 120 943

## Description

### BACKGROUND

### Technical Field

The present invention relates generally to the field of communications, and in particular to handling data on mobile wireless communications devices.

### Description of the Related Art

Data capabilities on mobile wireless communications devices ("mobile devices") have significantly increased over time. However, the increased data capabilities have also generated concerns over how to handle data in view of digital rights management issues. Digital rights management seeks to protect digital assets and control the distribution and usage of those digital assets. Accordingly, balancing the need for greater data handling capabilities with the needs of digital rights management have led to difficulties as to how data can be effectively and efficiently backed up, copied, edited, or otherwise handled on mobile devices.

EP 1 261 185 A2 discloses a cellular phone comprising a controller storing content data received from a distribution server into a memory. When the content data is to be transmitted to a memory card, a random number key generator generates a license key, and an encryption processing unit encrypts the content data using the license key. The controller transmits encrypted content data to a memory card via a memory card interface. Then, the controller deletes the content data stored in the memory. As a result, distribution of content data that must be deleted when transferring to another apparatus can be facilitated while protecting the copyright.

US 2002/0081995 A1 discloses a convenient way for securely storing sensitive data in a public storage area over a wireless network. Data that is to be backed up is encrypted using a public key of the user and is sent over the wireless network using a Wireless Application Protocol (WAP) technique and preferably contained within the body of a SyncML document or an XML document. The encrypted data can be later retrieved using a WAP technique and decrypted using the private key of the user.

WO 02/38315 discloses a "virtual bookshelf" for users of a digital rights management system. This invention lists the purchased material and/or material that the consumer has a right to use. This invention automatically backs up the consumer's material when it is downloaded; provides for the retrieval and/or synchronization of the material on a computer or other device; provides for the rights-based sharing of the material; and the ability to recommend or transfer the material to a third party with or without financial consideration.

US 2003/120943 A1 discloses systems and methods for controlling the use and duplication of digital content distributed on removable media. In accordance with embodiments of the present invention digital content is protected by allowing a particular number of protected (e.g., encrypted) copies of the digital content to be made. Typically, these copies may only be used on and moved between authorized devices. In one embodiment, if copies are desired, the maximum number of allowable copies of the protected digital content are made and stored on a computer's hard drive when the storage medium (e.g., a CD) containing the content is inserted into the computer. Each copy can then be moved but not copied to other devices (e.g., portable solid state devices). In an alternative embodiment, the storage medium containing the digital content is writable (e.g., a CD-R). When the storage medium is inserted into the computer, the

computer writes information to the storage medium which regulates future copying and playing of the digital content on the storage medium.

US 2002/0197981 A1 discloses that a mobile station may automatically extract and store contact information contained in received HTML data, when a web page is accessed by the mobile station. Such mobile station may extract telephone numbers, email addresses or URLs (unified resource locator), which may be contained in HTML data of an accessed web page.

WO 03/005145 A2 discloses a digital voucher, which is distributed from a distributing mobile device or from a retail content service to a receiving mobile device. The digital voucher may reference the content of a digital asset, which may be located elsewhere in the network. The digital voucher authorizes the receiving mobile device to access such content. Thus, the receiving mobile device can download a copy of portions or all of the content dependent on the terms specified in the voucher.

### SUMMARY

Methods and systems are provided for handling a plurality of digital assets, with the digital assets including audio digital assets, video digital assets, software, graphics digital assets, or combinations thereof, on a wireless mobile communications device, wherein backups of the plurality of digital assets are created so as conform to digital rights management issues. Links and optional encrypted versions of the plurality of digital assets may be stored so that the mobile device or other electronic devices may access the backups. A data structure may be used to specify the format of the backups.

Data to and from the mobile device may be transmitted through data signals, such as those embodied on carrier waves or other media. Computer-readable media, such as volatile and non-volatile storage mechanisms, may be used to store computer instructions for implementing the systems and methods disclosed herein.

As will be appreciated, the invention is capable of other and different embodiments, and its several details are capable of modifications in various respects, all without departing from the spirit of the invention. Accordingly, the drawings and description set forth below are to be regarded as illustrative in nature and not restrictive.

### BRIEF DESCRIPTION OF THE DRAWINGS

FIG. 1 is an overview of an example communication system in which a wireless communication device may be used.
FIG. 2 is a block diagram of a system that performs backup operations of digital assets.
FIG. 3 is a block diagram of a system that performs backup and restoring operations of digital assets.
FIG. 4 is a block diagram of a system that allows other mobile devices to access a digital asset via a backup.
FIG. 5 is a flowchart depicting steps for performing backups of digital assets.
FIG. 6 is a block diagram depicting the use of links in backing up digital assets.
FIG. 7 is a block diagram depicting the use of encryption techniques in generating backups of digital assets.
FIG. 8 is a block diagram depicting the use of secure interfaces in accessing backups of digital assets.
FIG. 9 is a data structure diagram depicting a digital asset backup data structure.
FIG. 10 depicts data fields in an example of a digital asset backup data structure.
FIG. 11 depicts an example of data fields and values of a digital asset backup data structure.
FIG. 12 is a block diagram of an example mobile device.

### DETAILED DESCRIPTION OF THE DRAWINGS

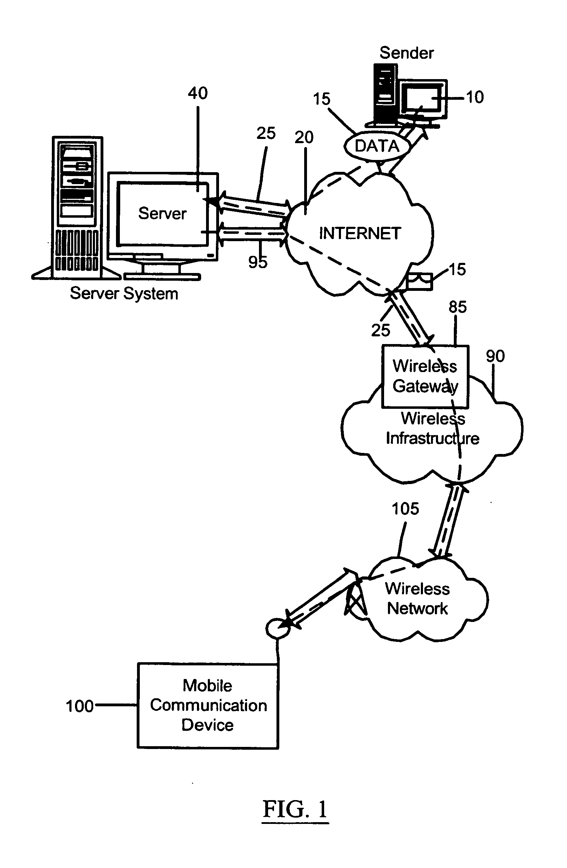

FIG. 1 is an overview of an example communication system in which a wireless communication device may be used. One skilled in the art will appreciate that there may be hundreds of different topologies, but the system shown in FIG. 1 helps demonstrate the operation of the approaches described herein. There may also be many senders and recipients. The system shown in FIG. 1 is for illustrative purposes only, and shows an Internet e-mail environment where security is not generally used.

FIG. 1 shows a data sender 10, the Internet 20, a server system 40, a wireless gateway 85, wireless infrastructure 90, a wireless network 105 and a mobile communication device 100.

A sender system 10 may, for example: be connected to an ISP (Internet Service Provider), such as America Online (AOL), on which a user of the system 10 has an account; located within a company, possibly connected to a local area network (LAN), and connected to the Internet 20; or connected to the Internet 20 through an ASP (application service provider). Those skilled in the art will appreciate that the systems shown in FIG. 1 may instead be connected to a wide area network (WAN) other than the Internet, although e-mail transfers are commonly accomplished through Internet-connected arrangements as shown in FIG. 1.

The server 40 may be implemented, for example, on a network computer within the firewall of a corporation, a computer within an ISP or ASP system or the like, and acts as the main interface for e-mail exchange over the Internet 20. Although other systems might not require a server system 40, a mobile device 100 configured for receiving and possibly sending data will normally be associated with an account on a server. Perhaps the two most common servers are Microsoft Exchange™ and Lotus Domino™. These products are often used in conjunction with Internet routers that route and deliver mail and other data. Server 40 may extend beyond just e-mail sending and receiving; they also include dynamic database storage engines that have predefined database formats for data like calendars, to-do lists, task lists, e-mail and documentation as well as having voice and phone capabilities.

The wireless gateway 85 and infrastructure 90 provide a link between the Internet 20 and wireless network 105. The wireless infrastructure 90 determines the most likely network for locating a given user and tracks the user as they roam between countries or networks. Data is then delivered to the mobile device 100 via wireless transmission, typically at a radio frequency (RF), from a base station in the wireless network 105 to the mobile device 100. The particular network 105 may be virtually any wireless network over which data may be exchanged with a mobile communication device.

Regardless of the specific mechanism controlling the forwarding of data to the mobile device 100, the sender's data 15, or possibly a translated or reformatted version thereof, is sent to the wireless gateway 85. The wireless infrastructure 90 includes a series of connections to wireless network 105. These connections could be Integrated Services Digital Network (ISDN), Frame Relay or T1 connections using the TCP/IP protocol used throughout the Internet. As used herein, the term "wireless network" is intended to include (but is not limited to) three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Division Multiple Access (CDMA) networks, (2) Groupe Special Mobile or Global System for Mobile Communications (GSM) and General Packet Radio Service (GPRS) networks, and (3) future third-generation (3G) networks like Enhanced Data-rates for GSM Evolution (EDGE) and Universal Mobile Telecommunications Systems (UMTS). Some older examples of data-centric networks include the Mobitex™ Radio Network and the DataTAC™ Radio Network. Examples of older voice-centric data networks include Personal Communication Systems (PCS) networks like GSM, and TDMA systems.

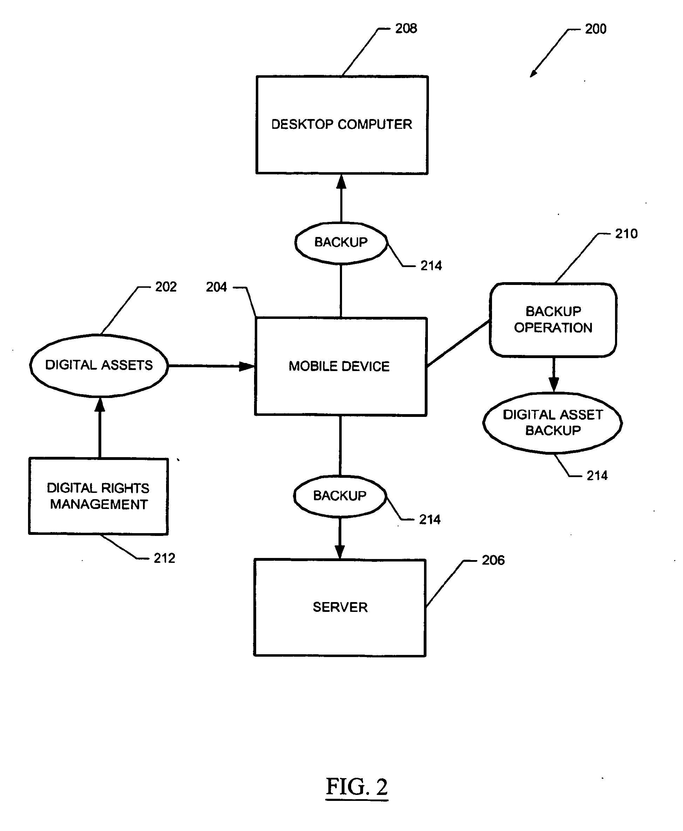

FIG. 2 depicts a system 200 that allows backups of digital assets 202 on a mobile device 204 in a manner that addresses digital rights management and/or other data handling issues. A mobile device 204 can receive a digital asset (e.g., bitmap image, song, ring tone, software such as in games and other types of software, electronic book, video, etc.) from many different sources, such as from a download via a company's website.

The download may be subject to licensing terms that dictate how digital rights 212 should be managed on the mobile device 204 with respect to the downloaded digital asset 202. The mobile device is configured such that a backup operation 210 is performed without allowing a digital asset backup 214 to be viewed, played or otherwise activated. The digital asset backup 214 may be stored either in a remote archive or as another instance on the mobile device 204.

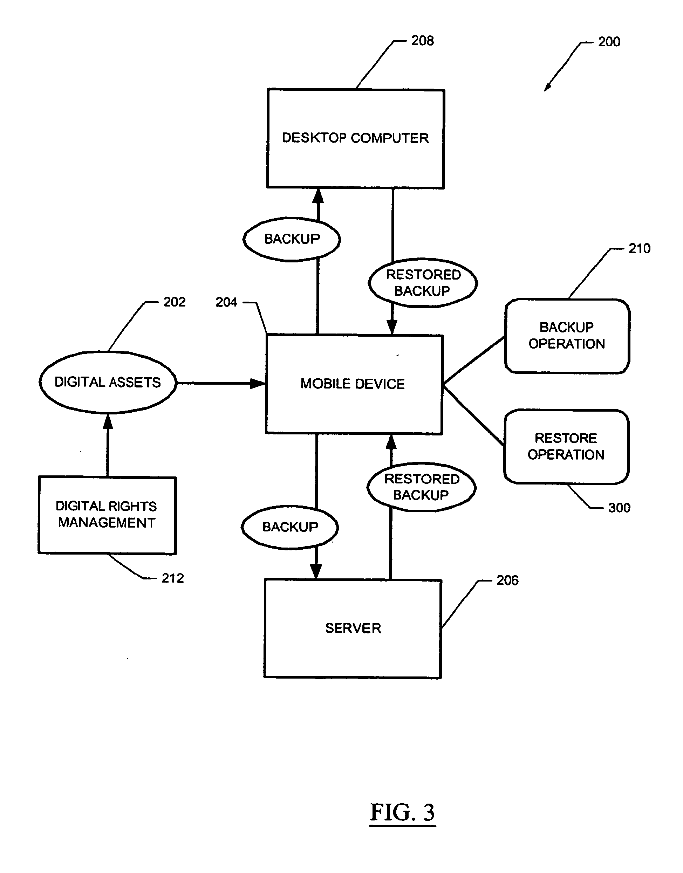

The backup of digital assets 202 is useful in many different situations. As shown for example in FIG. 3, a user may wish to perform a restore operation 300 in order to restore to the mobile device 204 a digital asset lost due to a device malfunction or unavailable for another reason. A restoring of the digital asset may be performed under a number of situations, such as automatically performing a restore operation 300 upon power up of the mobile device 204. The backup may be stored locally on the mobile device 204, remotely on a server 206 or desktop computer 208, or both; and hence recoverable from a source that has the backup.

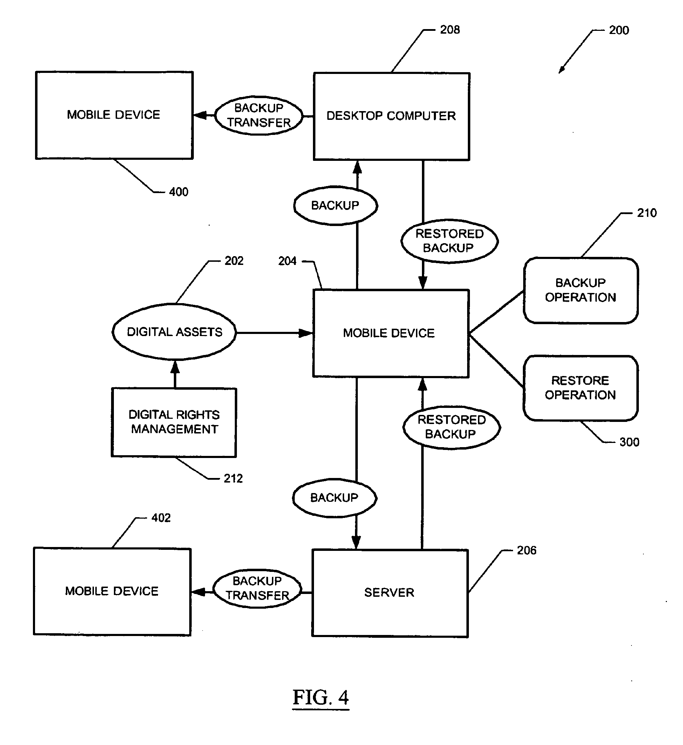

However, it should be understood that many other uses may be made of the backup system 200. For example, FIG. 4 shows other mobile devices (400, 402) being able to access the digital asset backup without allowing the digital asset backup to be viewed, played or otherwise activated by the mobile devices (400, 402), thereby continuing to conform to the restrictions imposed on the digital asset by digital rights management. The mobile device 204 may be configured with the capability of designating which other mobile devices (e.g., 400, 402) are allowed to restore or access a digital asset backup.

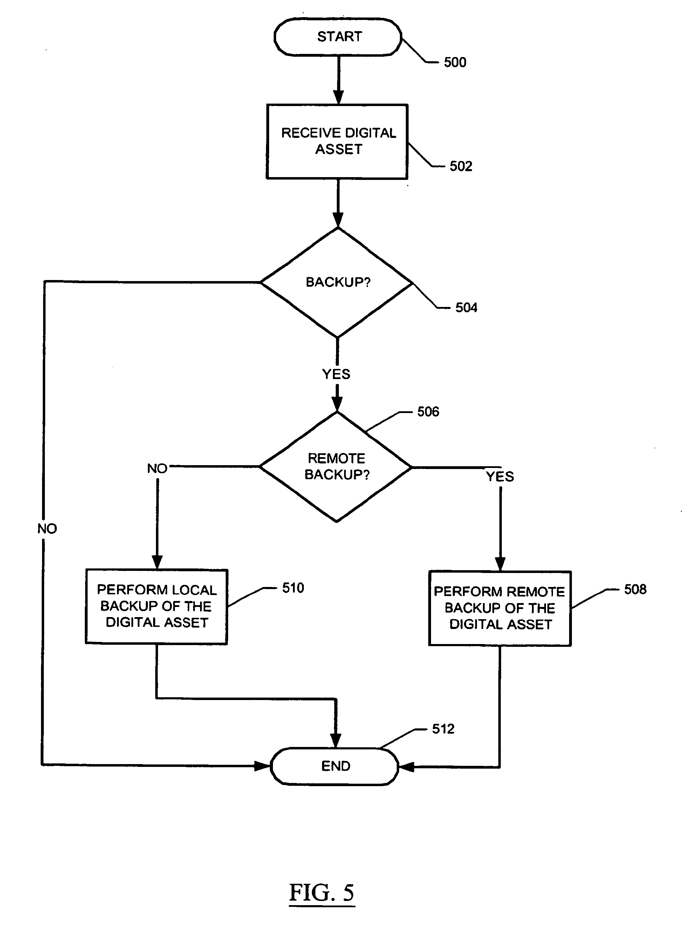

FIG. 5 depicts steps for backing up digital assets on a mobile device. Start block 500 indicates that at step 502, a digital asset is received by the mobile device. As described above, the digital asset can be downloaded to the mobile device over a wireless network. The digital asset can also be downloaded from the user's desktop computer (such as through an infrared port, a communications cable, or a cradle) or from a storage device that can be attached to or inserted into the mobile device.

If a backup is to be performed as determined by decision step 504, then processing continues at decision step 506, else backup processing ends at end block 512. Decision step 504 may decide to perform a backup due to the user specifying that a backup of the digital asset is to be automatically performed. The backup may also be performed for other reasons, such as automatically backing up digital assets as they are loaded onto the mobile device.

If processing continues at decision step 506, then it is determined whether a remote backup is desired. This determination may be based on such factors as whether a connection to the remote system is available.

If a remote backup is not to be performed as determined by decision step 506, then step 510 performs a local backup of the digital asset without allowing the backup to be viewed, played or otherwise activated. However if a remote backup is to be performed, then the backup of the digital asset is sent to the remote system. Processing then ends at end block 512.

It should be understood that the steps in the flowchart need not necessarily include all of the steps disclosed herein and may include further steps and operations in addition thereto. For example, decision step 506 may be omitted if the mobile device only wishes to locally backup digital assets or wishes to only remotely backup digital assets. As another example, a mobile device may elect to both locally and remotely backup a digital asset.

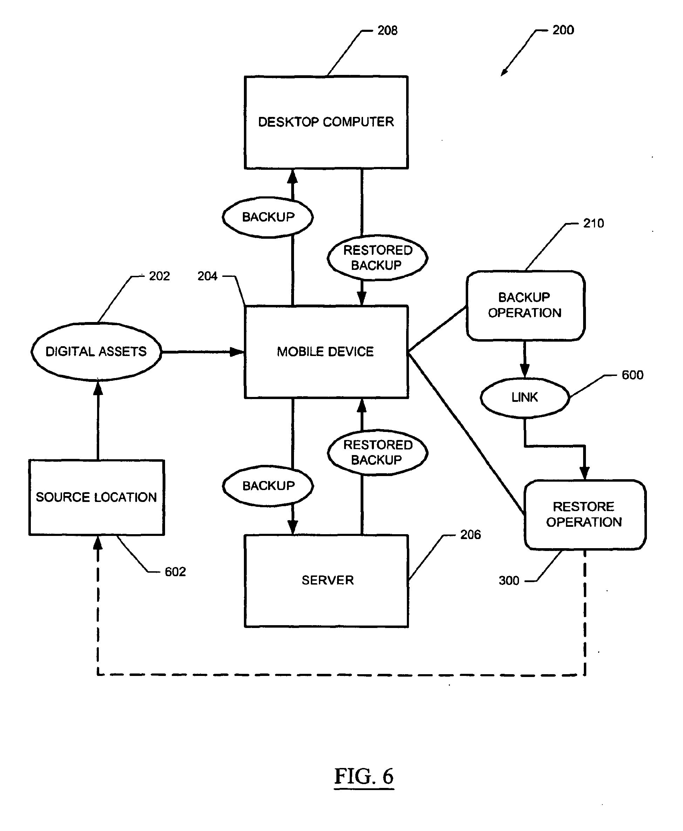

As shown in FIG. 6, a backup may be performed by storing as the backup a link 602 to the remote source location 602 of the digital asset 202. The link 602 (e.g., reference) can be backed up locally and/or remotely. If the digital asset needs to be restored to the mobile device 204 or otherwise accessed, then the mobile device 204 uses a restore operation 300 to locate the digital asset via the link 600 and restore the digital asset to the mobile device 204.

The backup operation 210 may happen automatically when the digital asset is loaded onto the mobile device 204, such as through a copy-paste operation into a document of the mobile device 204. If a link 600 is a URL (uniform resource locator) such as to a web page on a vendor's website, the backup operation 210 may include storing the original URL with each download of media content.

A link 600 as a backup is useful to send information to someone. For example, a user could send an e-mail containing the link 600 saying "Here is that ringtone you have been looking for: <link>." The recipient would click on the link 600, confirm payment, and download the content.

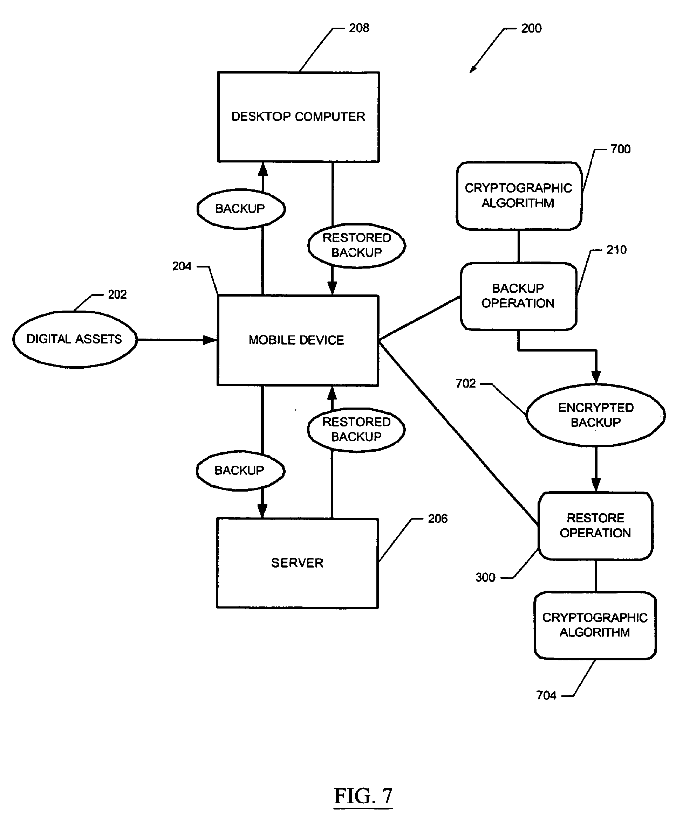

Other backup approaches may be used. For example as shown in FIG. 7, the safe and managed digital asset storage system 200 could be extended physically and logically from the mobile device 204 by way of cryptographic techniques, wherein the backup operation 210 encrypts a copy of the digital asset through a cryptographic algorithm 700 in order to create an encrypted backup 702. Cryptographic algorithms 700, such as those available in the cryptography toolkit provided by the assignee of this application, may be used for the backup operation. One such cryptographic algorithm that may be used is the AES (Advanced Encryption Standard) cryptographic algorithm.

The cryptographic algorithm 700 uses information not readily knowable by others to encrypt a backup copy of the digital asset, thereby limiting the user's and other's capability to access and effectively distribute the digital asset. For example, the data could be encrypted with user specific data, preventing such a compromise. Still further the cryptographic algorithm 700 can use information not only relatively or easily unknowable by others, but also not knowable by the user of the mobile device 204. As an illustration, the mobile device's SIM (subscriber identity module) card information or hash thereof may be used for the key by the cryptographic algorithm 700. As another example, the multi-digit IMSI (International Mobile Subscriber Identity) number and/or IMEI (International Mobile Equipment Identity) number could be used as the key. These pieces of information are not generally visible to the user, and can be used as secret data in the backup encryption operations. A cryptographic hash of one or more of these identity data items may be used as an additional security measure since this information itself is also used for encrypting information with the SIM card. Additionally, if the SIM card information is used, then this would allow the user to switch devices and maintain their data more easily.

Other examples include: using any non-transferrable and non-replicable and sufficiently unique data or hash thereof for a key in the backup encryption operations; using an internal device serial number or hash thereof for a key; randomly assigning a key and writing it to a SIM card file; using any of the aforementioned techniques to encrypt a random key that encrypted the data (e.g., use of a session key); using combinations, either in serial or in parallel, as the key (e.g., this would allow extensions such as "usable by the same device OR the same SIM card"); and/or using secret data stored on a company infrastructure server. This last approach may facilitate escrow access, and is typically better at storing larger amounts of secret data than the mobile device 204, especially if key length becomes insufficient. This might be useful for enterprises that require the ability to search data to comply with regulations.

The backup operation may create the backup on receipt of the content. This prevents switching the SIM card and sending it to another mobile device if so desired. It is noted that the data of the digital asset may be internally cached in an unencrypted form, thereby allowing for faster access.

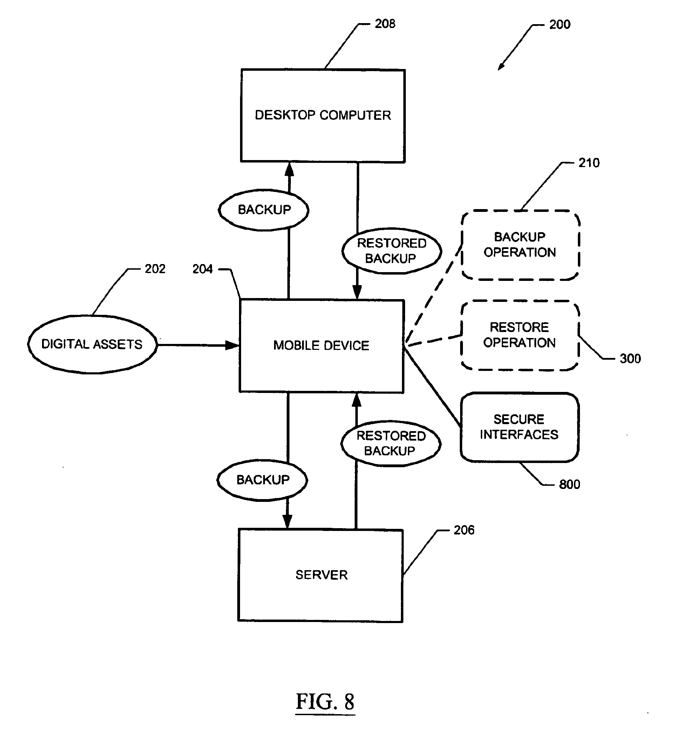

FIG. 8 illustrates another approach to handling digital assets 202 on a mobile device 204. In addition to or in replacement of the backup/restoring operations (210, 300), the mobile device 204 can provide secure interfaces 800 to the digital assets 202 downloaded to the mobile device 204. In this example, an application is able to reference a sound file (e.g., a MIDI file) and play it without being able to access the bytes of the sound file. This can be done by interposing the secure interface between the digital asset and the application. A secure interface, such as the Java MMAPI interface, may be used whereby an insecure or untrusted application may request a digital asset be accessed, for example a piece of music. The secure implementation would verify the asset may be accessed on the particular mobile device. The untrusted application could not access, and hence expropriate, the digital data but would only have access to general information such as the duration or amount of visual space required. As another example, an image file could be displayed without being able to access individual pixel information or copy it anywhere other than the screen.

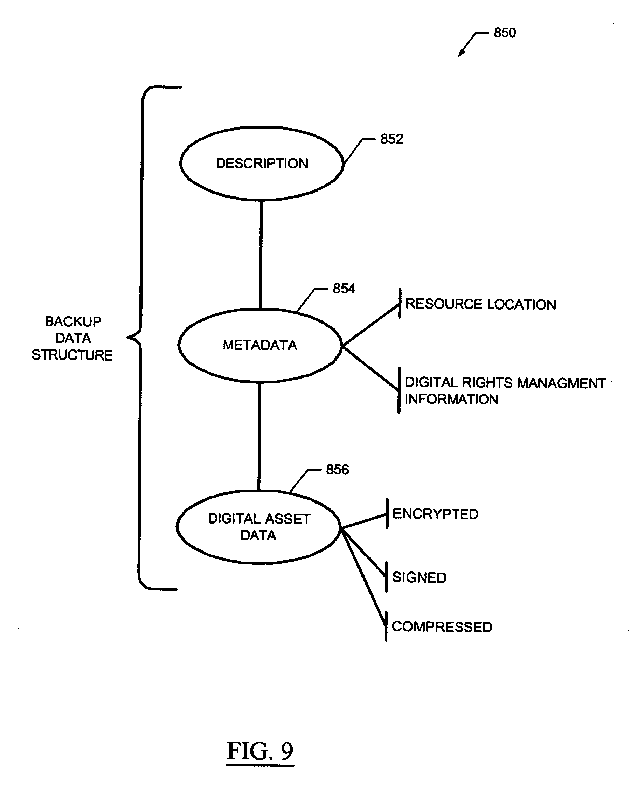

FIG. 9 shows at 850 a data structure as an example of a backup storage format for use with the methods and systems disclosed herein. The backup data structure 850 illustrated in FIG. 9 includes a description portion 852 for storing information about how the data of the digital asset is being protected, such as information about the key used to encrypt the data. A metadata portion 854 stores information about the digital asset. This may include restrictions on use of the digital asset, copyright notices, location of the digital asset, etc. The metadata portion 854 may be encrypted, or alternatively some or all of the metadata does not have to be encrypted. If desired, it can be protected with a signature. This allows the rights to be viewed. Any packet with an invalid signature could be refused by the mobile device because this provides an indication that a user had tampered with the metadata (e.g., removing or altering the copyright notice). The backup data structure 850 includes a portion 856 to store the digital asset data. Within this portion 856 of the data structure 850, the digital asset data can be encrypted, and if desired, signed and/or compressed.

It should be understood that the backup data structure 850 illustrates a possible format of backup data for storage on computer-readable media and/or in a computer program. A backup data structure 850 may be structured to include more or less information than what is depicted in FIG. 9. For example as depicted in FIG. 9, the backup data structure 850 contains portions that store a link to the original source of the digital asset as well as portions that store an encrypted version of the digital asset. Other backup data structures may be used, such as those that only store the source link, or those that only store the encrypted version, etc.

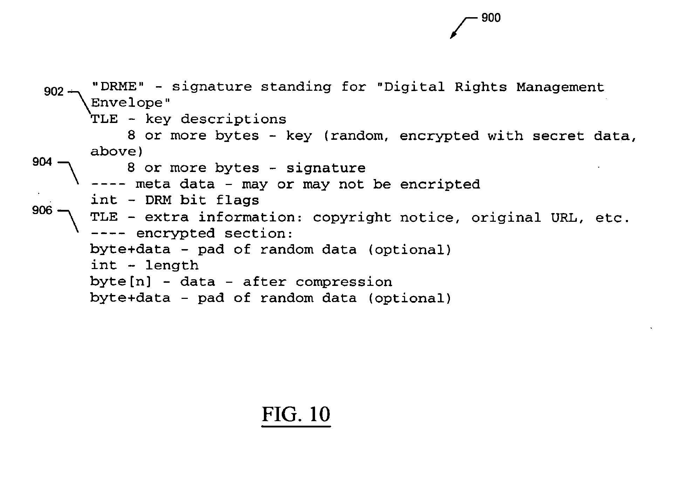

FIG. 10 shows an example of different fields and their formats and lengths for use in backup data structure 900. However, it should be understood that different fields, formats, and lengths may be used while still being usable by the systems and methods disclosed herein.

Section 902 of the data structure 900 includes type length encoded (TLE) fields that hold key descriptions. Eight of more bytes may be used to describe the key which accesses the encrypted digital asset backup. Eight of more bytes may be used to describe the signature of the data structure 900 to ensure its integrity.

Section 904 contains metadata that provides such information as digital rights management (DRM) information. In the metadata portion 904, restriction information can be indicated through bit data. For example, a "deny copy" bit can be set to indicate that a mobile device cannot copy the digital asset. Other information may include the copyright notice associated with the digital asset, the source URL of the digital asset, etc.

Section 906 contains the encrypted backup version of the digital asset. The backup version may also be compressed and digitally signed.

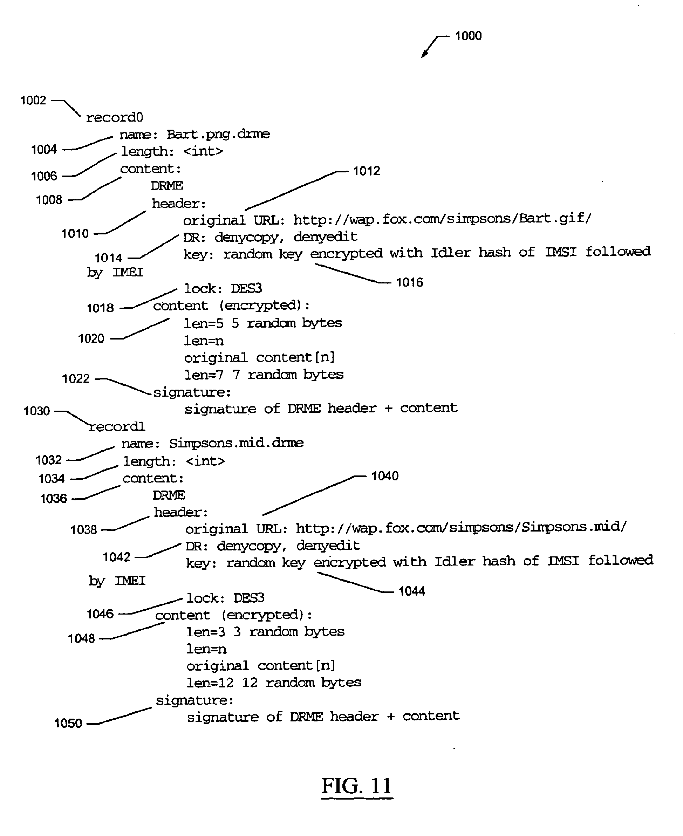

As an illustration of the use of a backup data structure, if a user has paid to use a bitmapped graphics file (Bart.png) and a sound file (Simpsons.mid), then a backup data structure 1000 and its values could resemble what is shown in FIG. 11. Two records (1002, 1030) of the data structure 1000 contain the two digital assets.

The name of the first record 1002 is provided at field 1004. The name is "Bart.png.drme" wherein the suffix "drme" is an acronym for digital rights management envelope. Field 1006 indicates the length of the record.

The content field 1008 contains such fields as a header field 1010 wherein the original source URL is provided at 1012 for the graphics digital asset. Digital rights, such as deny copying and deny editing, are specified at field 1014. Field 1016 provides a description of the key used to encrypt the graphics digital asset (e.g., random key encrypted with Idler hash of the IMSI identification number followed by the IMEI identification number). Field 1018 provides a description of the lock, which in this example is DES3. The encrypted graphics digital asset is contained at field 1020. The signature is provided at field 1022 and was generated by using the record's header 1010 and the record's content 1020.

The name of the second record 1030 is provided at field 1032 which is "Simpsons.mid.drme". Field 1034 indicates the length of the second record.

The content field 1036 contains such fields as a header field 1038 wherein the original source URL is provided at 1040 for the sound digital asset. Digital rights, such as deny copying and deny editing, are specified at field 1042. Field 1044 provides a description of the key used to encrypt the graphics digital asset (e.g., random key encrypted with Idler hash of the IMSI identification number followed by the IMEI identification number). Field 1046 provides a description of the lock, which in this example is DES3. The encrypted sound digital asset is contained at field 1048. The signature is provided at field 1050 and was generated by using the record's header 1038 and the record's content 1048.

The systems and methods disclosed herein are presented only by way of example and are not meant to limit the scope of the invention. Other variations of the systems and methods described above will be apparent to those skilled in the art and as such are considered to be within the scope of the invention.

For example, the systems and methods disclosed herein address such digital rights management concerns as the copying, generation of derivative works, performance, licensing, and so forth of digital assets, and they prevent unauthorized access to the digital content as well as limit access to those with proper authorization. The systems and methods may also address other data accessing issues, such as efficiently backing up data on a resource constrained mobile device (e.g., storing only a link to the original and not a complete copy of the digital asset) and/or handling group distribution of data. As an illustration of group distribution of data, a digital asset provider may send to members in a group a link to the digital asset. A member's mobile device then can select when to utilize resources to remotely access the digital asset. Distribution could also be accomplished by distributing encrypted digital assets and then supplying the keys to the recipients needed to access the encrypted digital assets. The keys supplied to each of the recipients could include a session key that has been encrypted by the recipient's public key.

Still further, one or more systems and methods described herein can provide a way in which a mobile device can address digital rights management issues in a different manner than they are addressed by other devices, such as desktop computers, since the digital rights management issues confronted by a mobile device are different from those that are confronted by such other devices. For example, digital asset downloads to mobile devices are typically performed in a different manner than digital asset downloads to desktop computers, and thus the mobile device environment has its own unique digital rights management issues.

As another example, the systems and methods allow for the use of non-volatile protected storage for keys (as opposed to hardware ID), as well as multiple branding (SIM card and device). Also a wide assortment of digital assets may be handled, such as current ringtones, legacy data, idle screens, etc.

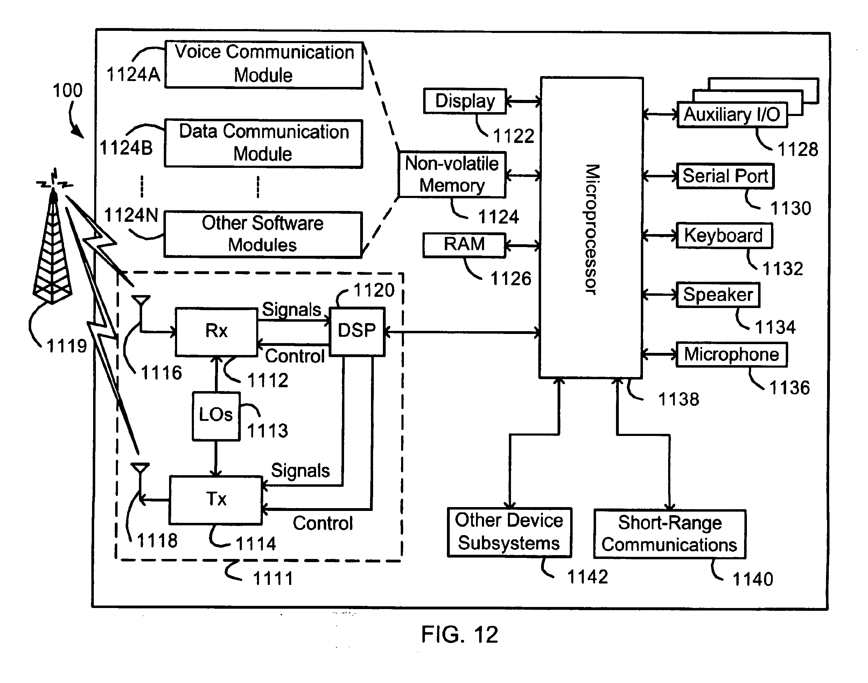

As yet another example, the systems and methods disclosed herein may be used with many different computers and devices, such as a wireless mobile communications device shown in FIG. 12. With reference to FIG. 12, the mobile device 100 is a dual-mode mobile device and includes a transceiver 1111, a microprocessor 1138, a display 1122, non-volatile memory 1124, random access memory (RAM) 1126, one or more auxiliary input/output (I/O) devices 1128, a serial port 1130, a keyboard 1132, a speaker 1134, a microphone 1136, a short-range wireless communications sub-system 1140, and other device sub-systems 1142.

The transceiver 1111 includes a receiver 1112, a transmitter 1114, antennas 1116 and 1118, one or more local oscillators 1113, and a digital signal processor (DSP) 1120. The antennas 1116 and 1118 may be antenna elements of a multiple-element antenna, and are preferably embedded antennas. However, the systems and methods described herein are in no way restricted to a particular type of antenna, or even to wireless communication devices.

The mobile device 100 is preferably a two-way communication device having voice and data communication capabilities. Thus, for example, the mobile device 100 may communicate over a voice network, such as any of the analog or digital cellular networks, and may also communicate over a data network. The voice and data networks are depicted in FIG. 12 by the communication tower 1119. These voice and data networks may be separate communication networks using separate infrastructure, such as base stations, network controllers, etc., or they may be integrated into a single wireless network.

The transceiver 1111 is used to communicate with the network 1119, and includes the receiver 1112, the transmitter 1114, the one or more local oscillators 1113 and the DSP 1120. The DSP 1120 is used to send and receive signals to and from the transceivers 1116 and 1118, and also provides control information to the receiver 1112 and the transmitter 1114. If the voice and data communications occur at a single frequency, or closely-spaced sets of frequencies, then a single local oscillator 1113 may be used in conjunction with the receiver 1112 and the transmitter 1114. Alternatively, if different frequencies are utilized for voice communications versus data communications for example, then a plurality of local oscillators 1113 can be used to generate a plurality of frequencies corresponding to the voice and data networks 1119. Information, which includes both voice and data information, is communicated to and from the transceiver 1111 via a link between the DSP 1120 and the microprocessor 1138.

The detailed design of the transceiver 1111, such as frequency band, component selection, power level, etc., will be dependent upon the communication network 1119 in which the mobile device 100 is intended to operate. For example, a mobile device 100 intended to operate in a North American market may include a transceiver 1111 designed to operate with any of a variety of voice communication networks, such as the Mobitex or DataTAC mobile data communication networks, AMPS, TDMA, CDMA, PCS, etc., whereas a mobile device 100 intended for use in Europe may be configured to operate with the GPRS data communication network and the GSM voice communication network. Other types of data and voice networks, both separate and integrated, may also be utilized with a mobile device 100.

Depending upon the type of network or networks 1119, the access requirements for the mobile device 100 may also vary. For example, in the Mobitex and DataTAC data networks, mobile devices are registered on the network using a unique identification number associated with each mobile device. In GPRS data networks, however, network access is associated with a subscriber or user of a mobile device. A GPRS device typically requires a subscriber identity module ("SIM"), which is required in order to operate a mobile device on a GPRS network. Local or non-network communication functions (if any) may be operable, without the SIM device, but a mobile device will be unable to carry out any functions involving communications over the data network 1119, other than any legally required operations, such as '911' emergency calling.

After any required network registration or activation procedures have been completed, the mobile device 100 may the send and receive communication signals, including both voice and data signals, over the networks 1119. Signals received by the antenna 1116 from the communication network 1119 are routed to the receiver 1112, which provides for signal amplification, frequency down conversion, filtering, channel selection, etc., and may also provide analog to digital conversion. Analog to digital conversion of the received signal allows more complex communication functions, such as digital demodulation and decoding to be performed using the DSP 1120. In a similar manner, signals to be transmitted to the network 1119 are processed, including modulation and encoding, for example, by the DSP 1120 and are then provided to the transmitter 1114 for digital to analog conversion, frequency up conversion, filtering, amplification and transmission to the communication network 1119 via the antenna 1118.

In addition to processing the communication signals, the DSP 1120 also provides for transceiver control. For example, the gain levels applied to communication signals in the receiver 1112 and the transmitter 1114 may be adaptively controlled through automatic gain control algorithms implemented in the DSP 1120. Other transceiver control algorithms could also be implemented in the DSP 1120 in order to provide more sophisticated control of the transceiver 1111.

The microprocessor 1138 preferably manages and controls the overall operation of the mobile device 100. Many types of microprocessors or microcontrollers could be used here, or, alternatively, a single DSP 1120 could be used to carry out the functions of the microprocessor 1138. Low-level communication functions, including at least data and voice communications, are performed through the DSP 1120 in the transceiver 1111. Other, high-level communication applications, such as a voice communication application 1124A, and a data communication application 1124B may be stored in the non-volatile memory 1124 for execution by the microprocessor 1138. For example, the voice communication module 1124A may provide a high-level user interface operable to transmit and receive voice calls between the mobile device 100 and a plurality of other voice or dual-mode devices via the network 1119. Similarly, the data communication module 1124B may provide a high-level user interface operable for sending and receiving data, such as e-mail messages, files, organizer information, short text messages, etc., between the mobile device 100 and a plurality of other data devices via the networks 1119. The microprocessor 1138 also interacts with other device subsystems, such as the display 1122, the RAM 1126, the auxiliary input/output (I/O) subsystems 1128, the serial port 1130, the keyboard 1132, the speaker 1134, the microphone 1136, the short-range communications subsystem 1140 and any other device subsystems generally designated as 1142.

Some of the subsystems shown in FIG. 12 perform communication-related functions, whereas other subsystems may provide "resident" or on-device functions. Notably, some subsystems, such as the keyboard 1132 and the display 1122 may be used for both communication-related functions, such as entering a text message for transmission over a data communication network, and device-resident functions such as a calculator or task list or other PDA type functions.

Operating system software used by the microprocessor 1138 is preferably stored in a persistent store such as non-volatile memory 1124. The non-volatile memory 1124 may be implemented, for example, as a Flash memory component, or as battery backed-up RAM. In addition to the operating system, which controls low-level functions of the mobile device 1110, the non-volatile memory 1124 includes a plurality of software modules 1124A-1124N that can be executed by the microprocessor 1138 (and/or the DSP 1120), including a voice communication module 1124A, a data communication module 1124B, and a plurality of other operational modules 1124N for carrying out a plurality of other functions. These modules are executed by the microprocessor 1138 and provide a high-level interface between a user and the mobile device 100. This interface typically includes a graphical component provided through the display 1122, and an input/output component provided through the auxiliary I/O 1128, keyboard 1132, speaker 1134, and microphone 1136. The operating system, specific device applications or modules, or parts thereof, may be temporarily loaded into a volatile store, such as RAM 1126 for faster operation. Moreover, received communication signals may also be temporarily stored to RAM 1126, before permanently writing them to a file system located in a persistent store such as the Flash memory 1124.

An exemplary application module 1124N that may be loaded onto the mobile device 100 is a personal information manager (PIM) application providing PDA functionality, such as calendar events, appointments, and task items. This module 1124N may also interact with the voice communication module 1124A for managing phone calls, voice mails, etc., and may also interact with the data communication module for managing e-mail communications and other data transmissions. Alternatively, all of the functionality of the voice communication module 1124A and the data communication module 1124B may be integrated into the PIM module.

The non-volatile memory 1124 preferably also provides a file system to facilitate storage of PIM data items on the device. The PIM application preferably includes the ability to send and receive data items, either by itself, or in conjunction with the voice and data communication modules 1124A, 1124B, via the wireless networks 1119. The PIM data items are preferably seamlessly integrated, synchronized and updated, via the wireless networks 1119, with a corresponding set of data items stored or associated with a host computer system, thereby creating a mirrored system for data items associated with a particular user.

Context objects representing at least partially decoded data items, as well as fully decoded data items, are preferably stored on the mobile device 100 in a volatile and non-persistent store such as the RAM 1126. Such information may instead be stored in the non-volatile memory 1124, for example, when storage intervals are relatively short, such that the information is removed from memory soon after it is stored. However, storage of this information in the RAM 1126 or another volatile and non-persistent store is preferred, in order to ensure that the information is erased from memory when the mobile device 100 loses power. This prevents an unauthorized party from obtaining any stored decoded or partially decoded information by removing a memory chip from the mobile device 100, for example.

The mobile device 100 may be manually synchronized with a host system by placing the device 100 in an interface cradle, which couples the serial port 1130 of the mobile device 100 to the serial port of a computer system or device. The serial port 1130 may also be used to enable a user to set preferences through an external device or software application, or to download other application modules 1124N for installation. This wired download path may be used to load an encryption key onto the device, which is a more secure method than exchanging encryption information via the wireless network 1119. Interfaces for other wired download paths may be provided in the mobile device 100, in addition to or instead of the serial port 1130. For example, a USB port would provide an interface to a similarly equipped personal computer.

Additional application modules 1124N may be loaded onto the mobile device 100 through the networks 1119, through an auxiliary I/O subsystem 1128, through the serial port 1130, through the short-range communications subsystem 1140, or through any other suitable subsystem 1142, and installed by a user in the non-volatile memory 1124 or RAM 1126. Such flexibility in application installation increases the functionality of the mobile device 100 and may provide enhanced on-device functions, communication-related functions, or both. For example, secure communication applications may enable electronic commerce functions and other such financial transactions to be performed using the mobile device 100.

When the mobile device 100 is operating in a data communication mode, a received signal, such as a text message or a web page download, is processed by the transceiver module 1111 and provided to the microprocessor 1138, which preferably further processes the received signal in multiple stages as described above, for eventual output to the display 1122, or, alternatively, to an auxiliary I/O device 1128. A user of mobile device 100 may also compose data items, such as e-mail messages, using the keyboard 1132, which is preferably a complete alphanumeric keyboard laid out in the QWERTY style, although other styles of complete alphanumeric keyboards such as the known DVORAK style may also be used. User input to the mobile device 100 is further enhanced with a plurality of auxiliary I/O devices 1128, which may include a thumbwheel input device, a touchpad, a variety of switches, a rocker input switch, etc. The composed data items input by the user may then be transmitted over the communication networks 1119 via the transceiver module 1111.

When the mobile device 100 is operating in a voice communication mode, the overall operation of the mobile device is substantially similar to the data mode, except that received signals are preferably be output to the speaker 1134 and voice signals for transmission are generated by a microphone 1136. Alternative voice or audio I/O subsystems, such as a voice message recording subsystem, may also be implemented on the mobile device 100. Although voice or audio signal output is preferably accomplished primarily through the speaker 1134, the display 1122 may also be used to provide an indication of the identity of a calling party, the duration of a voice call, or other voice call related information. For example, the microprocessor 1138, in conjunction with the voice communication module and the operating system software, may detect the caller identification information of an incoming voice call and display it on the display 1122.

A short-range communications subsystem 1140 is also included in the mobile device 100. The subsystem 1140 may include an infrared device and associated circuits and components, or a short-range RF communication module such as a Bluetooth™ module or an 802.11 module, for example, to provide for communication with similarly-enabled systems and devices. Those skilled in the art will appreciate that "Bluetooth" and "802.11" refer to sets of specifications, available from the Institute of Electrical and Electronics Engineers, relating to wireless personal area networks and wireless local area networks, respectively.

## Claims

1. A method for handling a plurality of digital assets (202) on a mobile device (204), with the digital assets including audio digital assets, video digital assets, software, graphics digital assets, or combinations thereof, the method comprising the steps of:
receiving digital assets (202) on the mobile device (204) from source locations (602) and storing the digital assets. (202) on the mobile device (204) for use on the mobile device (204), wherein the digital assets (202) are subject to digital rights management which limits copying, generation of derivative works, performance and/or licensing of the digital assets (202);
creating (210) backups of the plurality of digital assets by automatically storing references (600) to the source locations (602) where the plurality of digital assets (202) are accessible;
wherein the source locations (602) are remote locations with respect to the mobile device;
accessing (300) one of the stored references (600) in order to restore a digital asset (202) on the mobile device (204) for use on the mobile device (204), if the digital asset is not available on the mobile device.

2. The method of claim 1, wherein the references (600) to the source locations (602) are address locations for locating the digital assets (202) on a network.

3. The method according to one of the claims 1 or 2, wherein the references are Uniform Resource Locator, URL, links (600).

4. The method of claim 3, wherein the links as backups are stored remotely from the mobile device.

5. The method of claim 3, wherein the links (600) as backups are stored locally on the mobile device (204).

6. The method of claim 3, wherein the links (600) as backups are stored remotely from the mobile device (204) and are stored locally on the mobile device (204).

7. The method according to one of the claims 3 to 6, further comprising the step of using one of the links (600) to restore the digital asset (202) to the mobile device (204).

8. The method according to one of the claims 3 to 7, further comprising the step of using one of the links (600) to provide the digital asset (202) to another mobile device.

9. The method according to one of the previous claims, further comprising the step of
creating (210) backups of the plurality of digital assets (202) by creatIng, on the mobile device (204), encrypted versions (702) of the plurality of digital assets (202);
accessing (300) the encrypted version (702) of a digital asset (202) in order to restore the digital asset (202) for use on the mobile device (204).

10. The method according to one of the previous claims, wherein the backups of the plurality of digital assets (202) are performed in a manner that addresses Issues of digital rights management (212).

11. The method of claim 10, wherein digital rights management is directed to protecting digital assets (202) and controlling the distribution and usage of those digital assets (202).

12. The method according to one of the claims 10 or 11, wherein digital rights management is directed to how data can be backed up, copied, or edited on a mobile device (204).

13. The method according to one of the previous claims, wherein the plurality of digital assets (202) are downloaded from a website in an unencrypted form.

14. The method of claim 13, wherein the downloads of the plurality of digital assets (202) are subject to licensing terms, wherein the licensing terms are directed to digital rights management.

15. The method according to one of the previous claims, wherein the backups are created such that the backups are not capable of being viewed or played on another mobile device (400, 402) without a restore operation being performed.

16. The method according to one of the previous claims, wherein the backups are created such that the backups are not capable of being viewed or played on the mobile device (204) without a restore operation being performed.

17. The method of claim 16, wherein the restore operation conforms to digital rights management licensing terms stipulated by the owners of the plurality of digital assets (202).

18. The method according to one of the claims 16 or 17, further comprising the step of performing a restore operation in order to restore to the mobile device (204) a digital asset lost due to a mobile device malfunction.

19. The method according to one of the claims 16 to 18, further comprising the step of performing a restore operation automatically upon power up of the mobile device (204).

20. The method according to one of the claims 16 to 19, wherein another electronic device (400, 402) uses one of the digital asset backups in order to load a digital asset onto the other electronic device.

21. The method of claim 20, wherein the loading of the digital asset onto the other electronic device (400, 402) conforms to digital rights management licensing terms stipulated by the owner of the digital asset (202).

22. The method according to one of the claims 20 or 21, wherein the mobile device (204) designates which other electronic devices (400, 402) are permitted to use the digital asset backups in order to acquire digital assets (202).

23. The method according to one of the previous claims, wherein the creating of a digital asset backup is automatically performed upon download of a digital asset (202) to the mobile device (204).

24. The method according to one of the previous claims, wherein the backups are stored on a remote computer system (208), wherein the remote computer system includes means for recovering the backup for use on the mobile device (204).

25. The method according to one of the previous claims, wherein the backups are stored on the mobile device (204).

26. The method according to one of the previous claims, wherein a digital asset backup is stored both on a remote computer system (208) and on the mobile device (204).

27. The method according to claim 9, wherein information specific to the mobile device (204) is used to create an encrypted version of a digital asset (202).

28. The method of claim 27, wherein the information includes the mobile device's SIM, subscriber identity module, card information.

29. The method of claim 27, wherein the information includes the mobile device's IMSI, International Mobile Subscriber Identity, number.

30. The method of claim 27, wherein the information includes the mobile device's IMEI, International Mobile Equipment Identity, number.

31. The method according to claim 9, wherein secret data stored on a company infrastructure server is used to create an encrypted version of a digital asset (202).

32. The method according to one of the previous claims, further comprising
the step of using a secure interface (800) that is interposed between a digital asset (202) and an application which requires activation of the digital asset (202);
wherein the application is not permitted to access the digital asset (202) directly but may access the digital asset (202) through the secure interface (800).

33. The method according to one of the previous claims, wherein the digital asset backups are used in handling group distribution of data.

34. The method according to one of the previous claims, wherein the mobile device (204) is a handheld wireless mobile communications device.

35. The method according to one of the claims 1 to 33, wherein the mobile device (204) is a notebook computer.

36. The method according to one of the claims 1 to 32, wherein the mobile device (204) is a personal digital assistant, PDA.

37. The method according to one of the previous claims, wherein a data signal is transmitted using a communication channel, wherein the data signal includes the backups created by the method according to one of the claims 1 to 36.

38. The method of claim 37, wherein the communication channel is a network, wherein the data signal is packetized data that is transmitted through a carrier wave across the network.

39. Computer-readable medium that stores instructions which will cause a mobile device (204) to perform the method according to one of the claims 1 to 38.

40. A mobile device (204) that handles backups of digital assets (202), with the digital assets including audio digital assets, video digital assets, software, graphics digital assets, or combinations thereof, the mobile device (204) comprising:
means for receiving digital assets (202) from source locations (602) and for storing the digital assets (202) for use on the mobile device (204), wherein the digital assets (202) are subject to digital rights management which limits copying, generation of derivative works, performance and/or licensing of the digital assets (202);
means for creating backups of the plurality of digital assets (202) by automatically storing, in a backup data structure (850), references (600) to the source locations (602) where the plurality of digital assets (202) are accessible;
wherein the source locations (602) are remote locations with respect to the mobile device (204);
wherein the backup data structure (850) is configured to be accessible by the mobile device (204) in order to access one of the stored references (600) in order to restore a digital asset on the mobile device (204) for use on the mobile device (204), if the digital asset Is not available on the mobile device;
wherein the backups are stored so as to comply with one or more digital rights management requirements (212).

41. The mobile device (204) of claim 40, wherein the backup data structure (850) is configured to store encrypted versions of the plurality of digital assets (202);
wherein the backup data structure (850) is configured to be accessible by the mobile device (204) in order to access the encrypted version of the digital asset stored in the backup data structure (850).

42. The mobile device (204) of claim 41, further comprising:
means for creating encrypted versions of the plurality of digital assets (202).

43. The mobile device (204) according to claim 41 or 42, wherein the backup data structure (850) includes a key descriptions section (852), a metadata section (854), and an encrypted section (856);
wherein the key descriptions section (852) Is for storing encrypted key information and signature key information;
wherein the metadata section (854) is for storing digital rights management information;
wherein the encrypted section (856) is for storing an encrypted version of a digital asset.

## Patentansprüche

1. Verfahren zur Handhabung einer Vielzahl von digitalen Assets (202) bzw. Werten auf einer mobilen Vorrichtung (204), wobei die digitalen Assets digitale Audio-Assets, digitale Video-Assets, Software, digitale Graphik-Assets oder Kombinationen daraus umfassen, wobei das Verfahren die Schritte aufweist:
Empfangen von digitalen Assets (202) auf der mobilen Vorrichtung (204) von Quellorten (602) und Speichern der digitalen Assets (202) auf der mobilen Vorrichtung (204) zur Verwendung auf der mobilen Vorrichtung (204),
wobei die digitalen Assets (202) einer digitalen Rechteverwaltung unterliegen, die ein Kopieren, Erzeugen von derivativen Arbeiten, Ausführen und/oder Lizensieren der digitalen Assets (202) beschränkt;
Erzeugen (210) von Backups bzw. Sicherungen der Vielzahl von digitalen Assets durch automatisches Speichern von Referenzen (600) zu den Quellorten (602), wo die Vielzahl von digitalen Assets (202) zugänglich sind;
wobei die Quellorte (602) entfernte Orte sind in Bezug auf die mobile Vorrichtung;
Zugreifen (300) auf eine der gespeicherten Referenzen (600), um ein digitales Asset (202) auf der mobilen Vorrichtung (204) wiederherzustellen zur Verwendung auf der mobilen Vorrichtung (204), wenn das digitale Asset auf der mobilen Vorrichtung nicht verfügbar ist.

2. Verfahren gemäß Anspruch 1, wobei die Referenzen (600) zu den Quellorten (602) Adressorte sind zum Lokalisieren der digitalen Assets (202) auf einem Netzwerk.

3. Verfahren gemäß einem der Ansprüche 1 oder 2, wobei die Referenzen URL(Uniform Resource Locator)-Links (600) sind.

4. Verfahren gemäß Anspruch 3, wobei die Links als Backups entfernt von der mobilen Vorrichtung gespeichert werden.

5. Verfahren gemäß Anspruch 3, wobei die Links (600) als Backups lokal auf der mobilen Vorrichtung (204) gespeichert werden.

6. Verfahren gemäß Anspruch 3, wobei die Links (600) als Backups entfernt von der mobilen Vorrichtung (204) gespeichert werden und lokal auf der mobilen Vorrichtung (204) gespeichert werden.

7. Verfahren gemäß einem der Ansprüche 3 bis 6, das weiter aufweist den Schritt eines Verwendens eines der Links (600), um die digitalen Assets (202) auf der mobilen Vorrichtung (204) wiederherzustellen.

8. Verfahren gemäß einem der Ansprüche 3 bis 7, das weiter aufweist den Schritt eines Verwendens eines der Links (600), um das digitale Asset (202) an eine andere mobile Vorrichtung zu liefern.

9. Verfahren gemäß einem der vorhergehenden Ansprüche, das weiter den Schritt aufweist
Erzeugen (210) von Backups der Vielzahl von digitalen Assets (202) durch Erzeugen, auf der mobilen Vorrichtung (204), von verschlüsselten Versionen (702) der Vielzahl von digitalen Assets (202);
Zugreifen (300) auf die verschlüsselte Version (702) eines digitalen Assets (202), um das digitale Asset (202) zur Verwendung auf der mobilen Vorrichtung (204) wiederherzustellen.

10. Verfahren gemäß einem der vorhergehenden Ansprüche, wobei die Backups der Vielzahl von digitalen Assets (202) auf eine Weise durchgeführt werden, die Aspekte einer digitalen Rechteverwaltung (212) adressiert.

11. Verfahren gemäß Anspruch 10, wobei eine digitale Rechteverwaltung ein Schützen von digitalen Assets (202) und Kontrollieren der Verteilung und Benutzung dieser digitalen Assets (202) betrifft.

12. Verfahren gemäß einem der Ansprüche 10 oder 11, wobei eine digitale Rechteverwaltung darauf gerichtet ist, wie Daten auf einer mobilen Vorrichtung (204) gesichert, kopiert oder editiert werden können.

13. Verfahren gemäß einem der vorhergehenden Ansprüche, wobei die Vielzahl von digitalen Assets (202) von einer Webseite in einer nichtverschlüsselten Form heruntergeladen wird.

14. Verfahren gemäß Anspruch 13, wobei die Downloads der Vielzahl von digitalen Assets (202) Lizenzierungsvorschriften unterliegen, wobei die Lizenzierungsvorschriften eine digitale Rechteverwaltung betreffen.

15. Verfahren gemäß einem der vorhergehenden Ansprüche, wobei die Backups derart erzeugt werden, dass die Backups nicht auf einer anderen mobilen Vorrichtung (400, 402) betrachtet oder abgespielt werden können, ohne dass eine Wiederherstellungsoperation durchgeführt wird.

16. Verfahren gemäß einem der vorhergehenden Ansprüche, wobei die Backups derart erzeugt werden, dass die Backups nicht auf der mobilen Vorrichtung (204) betrachtet oder abgespielt werden können, ohne dass eine Wiederherstellungsoperation durchgeführt wird.

17. Verfahren gemäß Anspruch 16, wobei die Wiederherstellungsoperation Lizenzierungsvorschriften einer digitalen Rechteverwaltung entspricht, die von den Eigentümern der Vielzahl von digitalen Assets (202) festgesetzt werden.

18. Verfahren gemäß einem der Ansprüche 16 oder 17, das weiter den Schritt aufweist eines Durchführens einer Wiederherstellungsoperation, um für die mobile Vorrichtung (204) ein digitales Asset wiederherzustellen, das aufgrund einer Fehlfunktion der mobilen Vorrichtung verloren ist.

19. Verfahren gemäß einem der Ansprüche 16 bis 18, das weiter den Schritt aufweist eines automatischen Durchführens einer Wiederherstellungsoperation bei einem Anschalten der mobilen Vorrichtung (204).

20. Verfahren gemäß einem der Ansprüche 16 bis 19, wobei eine andere elektronische Vorrichtung (400, 402) eines der Backups der digitalen Assets verwendet, um ein digitales Asset auf die andere elektronische Vorrichtung zu laden.

21. Verfahren gemäß Anspruch 20, wobei das Laden des digitalen Assets auf die andere elektronische Vorrichtung (400, 402) den Lizenzierungsvorschriften einer digitalen Rechteverwaltung entspricht, die von dem Eigentümer des digitalen Assets (202) festgesetzt werden.

22. Verfahren gemäß einem der Ansprüche 20 oder 21, wobei die mobile Vorrichtung (204) bestimmt, welche andere elektronische Vorrichtungen (400, 402) die Backups der digitalen Assets verwenden dürfen, um digitale Assets (202) zu akquirieren.

23. Verfahren gemäß einem der vorhergehenden Ansprüche, wobei das Erzeugen eines Backups eines digitalen Assets automatisch durchgeführt wird bei einem Herunterladen eines digitalen Assets (202) auf die mobile Vorrichtung (204).

24. Verfahren gemäß einem der vorhergehenden Ansprüche, wobei die Backups auf einem entfernten Computersystem (208) gespeichert sind, wobei das entfernte Computersystem Mittel umfasst zum Wiederherstellen des Backups zur Verwendung auf der mobilen Vorrichtung (204).

25. Verfahren gemäß einem der vorhergehenden Ansprüche, wobei die Backups auf der mobilen Vorrichtung (204) gespeichert sind.

26. Verfahren gemäß einem der vorhergehenden Ansprüche, wobei ein Backup eins digitalen Assets sowohl auf einem entfernten Computersystem (208) als auch auf der mobilen Vorrichtung (204) gespeichert ist.

27. Verfahren gemäß Anspruch 9, wobei eine für die mobile Vorrichtung (204) spezifische Information verwendet wird, um eine verschlüsselte Version eines digitalen Assets (202) zu erzeugen.

28. Verfahren gemäß Anspruch 27, wobei die Information die SIM (subscriber identity module)-Karte-Information der mobilen Vorrichtung umfasst.

29. Verfahren gemäß Anspruch 27, wobei die Information die IMSI (International Mobile Subscriber Identity)-Nummer der mobilen Vorrichtung umfasst.

30. Verfahren gemäß Anspruch 27, wobei die Information die IMEI (International Mobile Equipment Identity)-Nummer der mobilen Vorrichtung umfasst.

31. Verfahren gemäß Anspruch 9, wobei geheime Daten, die auf einem Firmeninfrastrukturserver gespeichert sind, verwendet werden, um eine verschlüsselte Version eines digitalen Assets (202) zu erzeugen.

32. Verfahren gemäß einem der vorhergehenden Ansprüche, das weiter aufweist den Schritt eines Verwendens einer sicheren Schnittstelle (800), die zwischen einem digitalen Asset (202) und einer Anwendung liegt, die eine Aktivierung des digitalen Assets (202) erfordert;
wobei die Anwendung nicht direkt auf das digitale Asset (202) zugreifen darf, sondern auf das digitale Asset (202) über die sichere Schnittstelle (800) zugreifen kann.

33. Verfahren gemäß einem der vorhergehenden Ansprüche, wobei die Backups der digitalen Assets verwendet werden bei einer Handhabung einer Gruppenverteilung von Daten.

34. Verfahren gemäß einem der vorhergehenden Ansprüche, wobei die mobile Vorrichtung (204) eine handgehaltene drahtlose mobile Kommunikationsvorrichtung ist.

35. Verfahren gemäß einem der Ansprüche 1 bis 33, wobei die mobile Vorrichtung (204) ein Notebook-Computer ist.

36. Verfahren gemäß einem der Ansprüche 1 bis 32, wobei die mobile Vorrichtung (204) ein PDA (personal digital assistant) ist.

37. Verfahren gemäß einem der vorhergehenden Ansprüche, wobei ein Datensignal unter Verwendung eines Kommunikationskanals übertragen wird, wobei das Datensignal die Backups umfasst, die von dem Verfahren gemäß einem der Ansprüche 1 bis 36 erzeugt werden.

38. Verfahren gemäß Anspruch 37, wobei der Kommunikationskanal ein Netzwerk ist, wobei das Datensignal paketierte Daten ist, die über eine Trägerwelle über das Netzwerk übertragen werden.

39. Computerlesbares Medium, das Anweisungen speichert, die eine mobile Vorrichtung (204) veranlassen zur Durchführung des Verfahrens gemäß einem der Ansprüche 1 bis 38.

40. Mobile Vorrichtung (204), die Backups einer Vielzahl von digitalen Assets (202) handhabt, wobei die digitalen Assets digitale Audio-Assets, digitale Video-Assets, Software, digitale Graphik-Assets oder Kombinationen daraus umfassen, wobei die mobile Vorrichtung (204) aufweist:
Mittel zum Empfangen von digitalen Assets (202) von Quellorten (602) und zum Speichern der digitalen Assets (202) zur Verwendung auf der auf der mobilen Vorrichtung (204), wobei die digitalen Assets (202) einer digitalen Rechteverwaltung unterliegen, die ein Kopieren, Erzeugen von derivativen Arbeiten, Ausführen und/oder Lizensieren der digitalen Assets (202) beschränkt;
Mittel zum Erzeugen von Backups bzw. Sicherungen der Vielzahl von digitalen Assets (202) durch automatisches Speichern, in einer Backup-Datenstruktur (850), von Referenzen (600) zu den Quellorten (602), wo die Vielzahl von digitalen Assets (202) zugänglich sind;
wobei die Quellorte (602) entfernte Orte sind in Bezug auf die mobile Vorrichtung (204);
wobei die Backup-Datenstruktur (850) konfiguriert ist, durch die mobile Vorrichtung (204) zugänglich zu sein zum Zugreifen auf eine der gespeicherten Referenzen (600), um ein digitales Asset (202) auf der mobilen Vorrichtung (204) wiederherzustellen zur Verwendung auf der mobilen Vorrichtung (204), wenn das digitale Asset auf der mobilen Vorrichtung nicht verfügbar ist;
wobei die Backups gespeichert sind derart, um einer oder mehreren Anforderungen (212) einer digitalen Rechteverwaltung zu entsprechen.

41. Mobile Vorrichtung (204) gemäß Anspruch 40, wobei die Backup-Datenstruktur (850) konfiguriert ist zum Speichern von verschlüsselten Versionen der Vielzahl von digitalen Assets (202);
wobei die Backup-Datenstruktur (850) konfiguriert ist, durch die mobile Vorrichtung (204) zugänglich zu sein, um auf die verschlüsselte Version des digitalen Assets zuzugreifen, die in der Backup-Datenstruktur (850) gespeichert ist.

42. Mobile Vorrichtung (204) gemäß Anspruch 41, die weiter aufweist:
Mittel zum Erzeugen von verschlüsselten Versionen der Vielzahl von digitalen Assets (202).

43. Mobile Vorrichtung (204) gemäß Anspruch 41 oder 42, wobei die Backup-Datenstruktur (850) einen Schlüssel-Beschreibungs-Abschnitt (852), einen Metadaten-Abschnitt (854) und einen verschlüsselten Abschnitt (856) umfasst;
wobei der Schlüssel-Beschreibungs-Abschnitt (852) vorgesehen ist zum Speichern von verschlüsselter Schlüsselinformation und Signaturschlüsselinformation;
wobei der Metadaten-Abschnitt (854) vorgesehen ist zum Speichern von Information einer digitalen Rechteverwaltung;
wobei der verschlüsselte Abschnitt (856) vorgesehen ist zum Speichern einer verschlüsselten Version eines digitalen Assets.

## Revendications

1. Procédé de gestion d'une pluralité de ressources numériques (202) sur un dispositif mobile (204), les ressources numériques comprenant des ressources numériques audio, des ressources numériques vidéo, des logiciels, des ressources numériques graphiques ou des combinaisons de ceux-ci, le procédé comprenant les étapes consistant à :
recevoir des ressources numériques (202) sur le dispositif mobile (204) à partir d'emplacements d'origine (602) et stocker les ressources numériques (202) sur le dispositif mobile (204) afin qu'elles soient utilisées sur le dispositif mobile (204), les ressources numériques (202) étant soumises à une gestion des droits numériques qui limite la copie, la production d'oeuvres dérivées, la représentation et/ou la concession de licences des ressources numériques (202) ;
créer (210) des sauvegardes de la pluralité de ressources numériques en mémorisant automatiquement des références (600) aux emplacements d'origine (602) où sont accessibles la pluralité de ressources numériques (202) ;
dans lequel les emplacements d'origine (602) sont des emplacements distants par rapport au dispositif mobile ;
accéder (300) à l'une des références (600) mémorisées afin de restaurer une ressource numérique (202) sur le dispositif mobile (204) pour son utilisation sur le dispositif mobile (204), si la ressource numérique n'est pas disponible sur le dispositif mobile.

2. Procédé selon la revendication 1, dans lequel les références (600) aux emplacements d'origine (602) sont des emplacements d'adresse destinés à localiser les ressources numériques (202) sur un réseau.

3. Procédé selon l'une des revendications 1 et 2, dans lequel les références sont des liens URL (pour « *Uniform Resource Locator* » *-* Localisateur uniforme de ressource) (600).

4. Procédé selon la revendication 3, dans lequel les liens constituant des sauvegardes sont stockés à distance du dispositif mobile.

5. Procédé selon la revendication 3, dans lequel les liens (600) constituant des sauvegardes sont stockés localement sur le dispositif mobile (204).

6. Procédé selon la revendication 3, dans lequel les liens (600) constituant des sauvegardes sont stockés à distance du dispositif mobile (204) et sont stockés localement sur le dispositif mobile (204).

7. Procédé selon l'une des revendications 3 à 6, comprenant en outre l'étape consistant à utiliser un des liens (600) pour restaurer la ressource numérique (202) sur le dispositif mobile (204).

8. Procédé selon l'une des revendications 3 à 7, comprenant en outre l'étape consistant à utiliser un des liens (600) pour fournir la ressource numérique (202) à un autre dispositif mobile.

9. Procédé selon l'une des revendications précédentes, comprenant en outre les étapes consistant à :
créer (210) des sauvegardes de la pluralité de ressources numériques (202) en créant, sur le dispositif mobile (204), des versions chiffrées (702) de la pluralité de ressources numériques (202) ;
accéder (300) à la version chiffrée (702) d'une ressource numérique (202) afin de restaurer la ressource numérique (202) pour son utilisation sur le dispositif mobile (204).

10. Procédé selon l'une des revendications précédentes, dans lequel les sauvegardes de la pluralité de ressources numériques (202) sont effectuées d'une manière qui répond aux aspects de la gestion des droits numériques (212).

11. Procédé selon la revendication 10, dans lequel la gestion des droits numériques est destinée à protéger les ressources numériques (202) et à contrôler la distribution et l'utilisation de ces ressources numériques (202).

12. Procédé selon l'une des revendications 10 et 11, dans lequel la gestion des droits numériques est destinée à gérer la manière dont des données peuvent être sauvegardées, copiées ou éditées sur un dispositif mobile (204).

13. Procédé selon l'une des revendications précédentes, dans lequel la pluralité de ressources numériques (202) est téléchargée depuis un site web sous une forme non chiffrée.

14. Procédé selon la revendication 13, dans lequel les téléchargements de la pluralité de ressources numériques (202) sont soumis à des conditions de licence, les conditions de licence visant la gestion des droits numériques.

15. Procédé selon l'une des revendications précédentes, dans lequel les sauvegardes sont créées de manière à ce que les sauvegardes ne puissent pas être regardées ou reproduites sur un autre dispositif mobile (400, 402) sans qu'une opération de restauration soit réalisée.

16. Procédé selon l'une des revendications précédentes, dans lequel les sauvegardes sont créées de manière à ce que les sauvegardes ne puissent pas être regardées ou reproduites sur le dispositif mobile (204) sans qu'une opération de restauration soit réalisée.

17. Procédé selon la revendication 16, dans lequel l'opération de restauration se conforme aux conditions de concession de la gestion des droits numériques qui sont stipulées par les propriétaires de la pluralité de ressources numériques (202).

18. Procédé selon l'une des revendications 16 et 17, comprenant en outre l'étape consistant à effectuer une opération de restauration afin de restaurer sur le dispositif mobile (204) une ressource numérique perdue à cause d'un défaut de fonctionnement du dispositif mobile.

19. Procédé selon l'une des revendications 16 à 18, comprenant en outre l'étape consistant à effectuer une opération de restauration automatiquement lors de la mise sous tension du dispositif mobile (204).

20. Procédé selon l'une des revendications 16 à 19, dans lequel un autre dispositif électronique (400, 402) utilise l'une des sauvegardes de ressources numériques afin de charger une ressource numérique sur l'autre dispositif électronique.

21. Procédé selon la revendication 20, dans lequel le chargement de la ressource numérique sur l'autre dispositif électronique (400, 402) se conforme aux conditions de concession de la gestion des droits numériques qui sont stipulées par le propriétaire de la ressource numérique (202).

22. Procédé selon l'une des revendications 20 et 21, dans lequel le dispositif mobile (204) désigne quels sont les autres dispositifs électroniques (400, 402) qui sont autorisés à utiliser les sauvegardes de ressources numériques afin d'acquérir des ressources numériques (202).

23. Procédé selon l'une des revendications précédentes, dans lequel la création d'une sauvegarde de ressources numériques est effectuée automatiquement après le téléchargement d'une ressource numérique (202) sur le dispositif mobile (204).

24. Procédé selon l'une des revendications précédentes, dans lequel les sauvegardes sont stockées sur un système informatique distant (208), le système informatique distant comprenant un moyen destiné à récupérer la sauvegarde pour son utilisation sur le dispositif mobile (204).

25. Procédé selon l'une des revendications précédentes, dans lequel les sauvegardes sont stockées sur le dispositif mobile (204).

26. Procédé selon l'une des revendications précédentes, dans lequel une sauvegarde de ressources numériques est stockée à la fois sur un système informatique distant (208) et sur le dispositif mobile (204).

27. Procédé selon la revendication 9, dans lequel des informations spécifiques au dispositif mobile (204) sont utilisées pour créer une version chiffrée d'une ressource numérique (202).

28. Procédé selon la revendication 27, dans lequel les informations comprennent les informations de la carte SIM, pour « *Subscriber Identity Module* » Module d'identité d'abonné, du dispositif mobile.

29. Procédé selon la revendication 27, dans lequel les informations comprennent le numéro IMSI, pour « *International Mobile Subscriber Identity » -* Identité internationale d'abonné mobile, du dispositif mobile.

30. Procédé selon la revendication 27, dans lequel les informations comprennent le numéro IMEI, pour *« International Mobile Equipment Identity » -* Identité internationale d'équipement mobile, du dispositif mobile.

31. Procédé selon la revendication 9, dans lequel des données secrètes stockées sur un serveur d'infrastructure d'entreprise sont utilisées pour créer une version chiffrée d'une ressource numérique (202).

32. Procédé selon l'une des revendications précédentes, comprenant en outre l'étape consistant à utiliser une interface sécurisée (800) qui est interposée entre une ressource numérique (202) et une application qui demande l'activation de la ressource numérique (202) ;
dans lequel l'application n'est pas autorisée à accéder directement à la ressource numérique (202) mais peut accéder à la ressource numérique (202) via l'interface sécurisée (800).

33. Procédé selon l'une des revendications précédentes, dans lequel les sauvegardes de ressources numériques sont utilisées pour gérer la distribution groupée de données.

34. Procédé selon l'une des revendications précédentes, dans lequel le dispositif mobile (204) est un dispositif de communication mobile sans fil portatif.

35. Procédé selon l'une des revendications 1 à 33, dans lequel le dispositif mobile (204) est un ordinateur bloc-notes.

36. Procédé selon l'une des revendications 1 à 32, dans lequel le dispositif mobile (204) est un assistant numérique personnel.

37. Procédé selon l'une des revendications précédentes, dans lequel un signal de données est émis sur un canal de communication, le signal de données comprenant les sauvegardes créées par le procédé selon l'une des revendications 1 à 36.

38. Procédé selon la revendication 37, dans lequel le canal de communication est un réseau, dans lequel le signal de données est constitué de données en paquets qui sont émises à l'aide d'une onde porteuse sur le réseau.

39. Support lisible par ordinateur qui stocke des instructions qui commandent à un dispositif mobile (204) d'exécuter le procédé selon l'une des revendications 1 à 38.

40. Dispositif mobile (204) qui gère les sauvegardes de ressources numériques (202), les ressources numériques comprenant des ressources numériques audio, des ressources numériques vidéo, des logiciels, des ressources numériques graphiques ou des combinaisons de ceux-ci, le dispositif mobile (204) comprenant :
un moyen destiné à recevoir des ressources numériques (202) à partir d'emplacements d'origine (602) et à stocker les ressources numériques (202) afin qu'elles soient utilisées sur le dispositif mobile (204), les ressources numériques (202) étant soumises à une gestion des droits numériques qui limite la copie, la production d'oeuvres dérivées, la représentation et/ou la concession de licences des ressources numériques (202) ;
un moyen destiné à créer des sauvegardes de la pluralité de ressources numériques (202) en mémorisant automatiquement, dans une structure de données de sauvegarde (850), des références (600) aux emplacements d'origine (602) où sont accessibles la pluralité de ressources numériques (202) ;
dans lequel les emplacements d'origine (602) sont des emplacements distants par rapport au dispositif mobile (204) ;
dans lequel la structure de données de sauvegarde (850) est configurée pour être accessible à partir du dispositif mobile (204) afin d'accéder à l'une des références mémorisées (600) dans le but de restaurer une ressource numérique sur le dispositif mobile (204) pour son utilisation sur le dispositif mobile (204), si la ressource numérique n'est pas disponible sur le dispositif mobile ;
dans lequel les sauvegardes sont mémorisées de manière à se conformer à une ou plusieurs exigences de gestion des droits numériques (212).

41. Dispositif mobile (204) selon la revendication 40, dans lequel la structure de données de sauvegarde (850) est configurée pour stocker des versions chiffrées de la pluralité de ressources numériques (202) ;
dans lequel la structure de données de sauvegarde (850) est configurée pour être accessible à partir du dispositif mobile (204) afin d'accéder à la version chiffrée de la ressource numérique stockée dans la structure de données de sauvegarde (850).

42. Dispositif mobile (204) selon la revendication 41, comprenant en outre :
un moyen destiné à créer des versions chiffrées de la pluralité de ressources numériques (202).

43. Dispositif mobile (204) selon la revendication 41 ou 42, dans lequel la structure de données de sauvegarde (850) comprend une section de description de clefs (852), une section de métadonnées (854) et une section chiffrée (856) ;
dans lequel la section de description de clefs (852) est destinée à stocker des informations de clefs chiffrées et des informations de clefs de signature ;
dans lequel la section de métadonnées (854) est destinée à stocker des informations de gestion des droits numériques ; et
dans lequel la section chiffrée (856) est destinée à stocker une version chiffrée d'une ressource numérique.
